# FASCICULE DE BREVET EUROPEEN

(11) **EP 3 501 814 B1**
(45) Date de publication et mention de la délivrance du brevet: **13.05.2020**
(21) Numéro de dépôt: 18214172.1
(22) Date de dépôt: 19.12.2018
(51) Int. Cl.: B32B 5/02, B32B 37/12, B32B 38/18, B60R 13/08, G10K 11/168, B29C 51/00, B29C 51/26

(54) **PROCÉDÉ DE FABRICATION D'UNE PIÈCE D'INSONORISATION, NOTAMMENT DESTINÉE À ÉQUIPER UN VÉHICULE AUTOMOBILE**
HERSTELLUNGSVERFAHREN EINES SCHALLDÄMMTEILS, INSBESONDERE ZUR AUSSTATTUNG EINES KRAFTFAHRZEUGS
METHOD FOR MANUFACTURING A SOUNDPROOFING PART, IN PARTICULAR INTENDED FOR EQUIPPING A MOTOR VEHICLE

(30) Priorité: 20.12.2017 FR 1762597
(43) Date de publication de la demande: 26.06.2019
(73) Titulaire: Faurecia Automotive Industrie, 92000 Nanterre (FR)
(72) Inventeur: LANGINY, Michel, 08140 POURU ST REMY (FR)
(74) Mandataire: Lavoix

(56) Documents cités:
- EP-A1- 3 086 317
- EP-A2- 1 872 939
- US-A1- 2008 236 936
- US-A1- 2016 167 597

## Description

La présente invention concerne un procédé de fabrication d'une pièce d'insonorisation, notamment destinée à équiper un véhicule automobile. Une telle pièce d'insonorisation est par exemple destinée à être intercalée entre le compartiment moteur et l'habitacle du véhicule automobile.

La pièce d'insonorisation est du type « masse-ressort », et généralement formée d'une plaque de matériau de masse lourde associée à une couche de feutre.

Une telle pièce d'insonorisation présente habituellement une forme complexe, nécessaire à son intégration dans le véhicule automobile. Or, la fabrication d'une telle pièce d'insonorisation de forme complexe est généralement difficile à mettre en oeuvre.

On connait déjà, dans l'état de la technique, un procédé de fabrication d'une pièce d'insonorisation, comprenant les étapes suivantes :
- thermoformage de la couche de feutre,
- thermoformage de la plaque de masse lourde,
- encollage avec une colle thermofusible,
- mise en place de la couche de feutre sur la plaque de masse lourde, et
- pressage de la couche de feutre et de la plaque de masse lourde ensemble.

D'autres procédés de fabrication de pièces d'insonorisation sont connus d'après EP 3 086 317 ou US 2016/167597.

Un tel procédé de fabrication ne donne pas entière satisfaction.

Toute d'abord, le collage de la couche de feutre sur la plaque de masse lourde est difficile à effectuer. En particulier, compte tenu du temps nécessaire à l'application complète de la colle chaude, et du temps nécessaire au transfert du feutre, la colle a le temps de refroidir avant que la mise en place de la couche de feutre soit finalisée.

Ceci est accentué par le refroidissement rapide de la masse lourde dans son ensemble. Ainsi, il arrive dans certains cas que la colle thermofusible soit froide à la fin de son application sur la couche de feutre, et que la plaque de masse lourde soit également froide, si bien que le collage n'est alors pas réalisé correctement.

Par ailleurs, le feutre une fois thermoformée reste figé et n'a plus la possibilité de s'allonger ne serait-ce que quelque peu pour parfaitement épouser la masse lourde, laquelle peut éventuellement présenter quelques imperfection en terme d'épaisseur par exemple.

De l'ensemble de ces problèmes, il résulte que la mise en place de la couche de feutre sur la plaque de masse lourde est généralement difficile à mettre en oeuvre, ce qui peut entrainer de nombreux rebuts dû au décalage entre la plaque de masse lourde et du feutre et/ou un temps de cycle élevé.

L'invention a notamment pour but de remédier à ces inconvénients en fournissant un procédé de fabrication plus simple et plus rapide à mettre en oeuvre.

A cet effet, l'invention a notamment pour objet un procédé de fabrication d'une pièce d'insonorisation, de type masse/ressort, notamment pour un véhicule automobile, comprenant les étapes suivantes :
- fourniture d'un textile de matériau fibreux, comprenant des fibres fusibles, ou des résines,
- chauffage et thermoformage du textile de matériau fibreux, pour obtenir un textile thermoformé,
- fourniture d'un moule comprenant une partie inférieure et une partie supérieure, la partie inférieure présentant une forme complémentaire à celle du feutre thermoformé,
- disposition du textile thermoformé sur la partie inférieure du moule,
- dispersion d'un adhésif sur le textile thermoformé,
- fourniture d'une plaque de matériau de type masse lourde,
- chauffage de la plaque de masse lourde jusqu'à sa température de ramollissement,
- suite au chauffage de la plaque de masse lourde, étalage de la plaque de masse lourde sur le textile thermoformé, de manière à épouser sa forme,
- fermeture du moule, et compression du textile thermoformé et de la plaque de masse lourde superposés, de manière à former la pièce d'insonorisation,
- ouverture du moule et retrait de la pièce d'insonorisation.

Le procédé selon l'invention prévoit de thermoformer la masse lourde chaude sur le textile déjà thermoformé et encollé.

Le positionnement de la masse lourde ramollie sur le textile est simple et ne peut entrainer aucun décalage entre ces deux pièces.

Par ailleurs, lorsque l'adhésif est de la colle thermofusible, le contact de la masse lourde chaude sur cette colle thermofusible permet de réactiver cette colle thermofisible, et améliore donc le collage entre ces deux pièces.

Enfin, il est beaucoup plus facile de napper la masse lourde ramollie sur le textile que d'assembler le textile thermoformé sur une plaque de masse lourde thermoformée comme dans l'état de la technique car la masse lourde chaude a la possibilité de se déformer pour parfaitement épouser la forme du feutre. Il en résulte que le temps de cycle est fortement réduit.

Un procédé de fabrication selon l'invention peut comporter l'une ou plusieurs des caractéristiques suivantes, prises seules ou selon toutes combinaisons techniquement envisageables :
- L'adhésif est une colle thermofusible.
- L'adhésif est un film ou un non tissé laminé avec le textile, cet adhésif étant par exemple réalisé en Polyéthylène.
- Le textile est un feutre.
- La compression dans le moule est réalisée à froid.
- La partie inférieure de moule est au moins en partie concave.

La présente demande concerne également une pièce d'insonorisation réalisée par la mise en oeuvre du procédé de fabrication précédemment décrit.

Une telle pièce d'insonorisation, obtenue par un procédé de fabrication selon l'invention, peut aisément être distinguée d'une pièce d'insonorisation obtenue par un autre procédé, en délaminant la plaque de masse lourde du textile. En effet, la plaque de masse lourde étant chaude et ramollie lorsqu'elle est déposée sur le textile, la texture de ce textile est incrustée dans la plaque de masse lourde et y forme donc une empreinte qui sera visible après délaminage.

Une telle empreinte n'existerait pas sur une pièce d'insonorisation réalisée par un autre procédé.

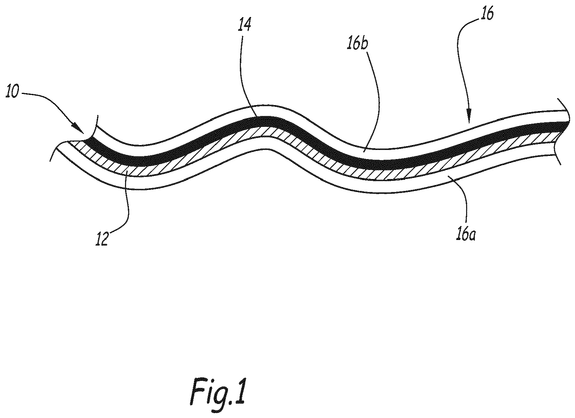

L'invention sera mieux comprise à la lecture de la description qui va suivre, donnée uniquement à titre d'exemple non limitatif et faite en se référant à la figure annexée représentant une pièce d'insonorisation en cours de fabrication, agencée dans un moule, selon un procédé de fabrication d'un exemple de mode de réalisation de l'invention.

On a représenté, sur la figure, une pièce d'insonorisation 10, de type masse/ressort. Cette pièce d'insonorisation 10 est par exemple destinée à équiper un véhicule automobile, notamment en étant agencée entre un compartiment moteur et un habitacle de ce véhicule automobile.

La pièce d'insonorisation 10 comporte un textile de matériau fibreux 12 et une plaque 14 de matériau de type masse lourde.

Le textile 12 comporte des fibres fusibles, c'est-à-dire propres à fondre lorsque leur température dépasse une température de fusion. Il peut comporter alternativement des résines thermoplastiques ou thermodurcissable qui réagissent et durcissent à une température donnée. En variante, ou de manière complémentaire, le textile 12 comporte des résines.

Le textile 12 est de préférence un non tissé, et plus particulièrement un feutre c'est-à-dire qu'il comporte essentiellement des fibres de coton recyclé.

La plaque 14 de masse lourde est de type classique. Par exemple, cette plaque imperméable de masse lourde présente généralement une masse surfacique élevée, notamment supérieure à 1 kg/m², en général de l'ordre de 1500 à 2000 kg/m², à base d'un matériau thermoplastique de type polyoléfine (Ethylène Vinyle Acétate ou Ethylène Propylène Diène Monomère) et d'une grande quantité de charge telle de la craie ou du sulfate de baryum.

La masse lourde 14 et le textile 12 assemblés forment un système masse-ressort, permettant, comme cela est connu en soi, une bonne insonorisation.

La pièce d'insonorisation 10 est réalisée au cours d'un procédé de fabrication, selon un exemple de mode de réalisation, qui va maintenant être décrit.

Le procédé comporte une étape de chauffage et de thermoformage du textile 12, pour obtenir un textile thermoformé.

Ce thermoformage est par exemple réalisé dans un moule de thermoformage 16. Ce moule de thermoformage 16 comporte des parties de moule inférieure 16a et 16b, présentant des empreintes complémentaires correspondant à la forme souhaitée pour le textile thermoformé.

Ces parties de moule 16a, 16b sont chauffées de manière classique, pour élever la température des fibres fusibles au-delà de leur température de fusion. Cela permet la déformation et le thermoformage du textile, par pressage entre les parties de moule 16a, 16b chauffées.

Après retrait de la partie supérieure de moule 16b, le textile thermoformé reste disposé sur la partie inférieure de moule 16a.

Avantageusement, la partie inférieure de moule 16a est au moins en partie concave, et de préférence principalement concave, de sorte que le textile thermoformé 12 reste bien en place sur cette partie inférieure de moule 16a.

Conformément à une variante, le textile 12 est thermoformé dans un autre moule puis rapporté sur la partie inférieure de moule 16a.

Le procédé comporte ensuite la dispersion d'un adhésif sur une face supérieure du textile thermoformé 12 (c'est-à-dire la face qui ne repose pas sur la partie inférieure de moule 16a), et de préférence sur l'intégralité de la face supérieure de ce textile thermoformé. Cette dispersion est par exemple réalisée par pulvérisation de l'adhésif sur cette face supérieure.

L'adhésif est avantageusement une colle thermofusible, c'est-à-dire une colle qui s'active lorsque la température dépasse un seuil prédéfini propre à cette colle. Une colle de ce type est également connue sous le terme de « Hot Melt ».

En variante, l'adhésif est un film ou un non tissé laminé avec le textile 12. Dans ce cas, cet adhésif est par exemple réalisé en Polyéthylène.

Le procédé comporte ensuite la fourniture de la plaque de masse lourde 14.

Le procédé comporte notamment le chauffage de cette plaque de masse lourde 14 jusqu'à sa température de ramollissement. Ce chauffage peut être réalisé de toute manière connue en soi, par exemple par infrarouge. FR 2 989 305 décrit de manière détaillée un exemple de procédé utilisé pour amener, chauffer et déposer une telle plaque de masse lourde sur un outil tel le demi-moule 16a à fin de thermoformage.

La plaque de masse lourde 14 ainsi chauffée devient malléable.

Le procédé comporte ensuite l'étalage de la plaque de masse lourde 14 sur le textile thermoformé 12, de manière à épouser sa forme du fait de sa malléabilité.

Il est à noter qu'il est aisé de positionner de manière précise la plaque de masse lourde 14 sur le textile 12. En outre, puisque la plaque de masse lourde 14 est déformée par le textile 12, il n'y a pas de décalage de forme entre eux.

Il est à noter que le textile 12 s'incruste alors en partie dans la masse lourde 14, laissant ainsi une empreinte qui pourrait être ultérieurement visible en délaminant le textile 12 et la masse lourde 14.

La plaque de masse lourde 14 étant chaude, elle réactive la colle thermofusible, ce qui améliore l'efficacité de cette colle et permet d'assurer une bonne solidarisation du textile 12 avec cette plaque de masse lourde 14.

Le procédé comporte ensuite la fermeture du moule 16, et la compression du textile thermoformé 12 et de la plaque de masse lourde 14 superposés, entre les parties de moule inférieure 16a et supérieure 16b, de manière à former la pièce d'insonorisation 10.

A cet effet, le moule 16 comporte des moyens classiques de déplacement des parties de moules, par exemple à vérins.

Il est à noter que cette compression est de préférence réalisée à froid, de sorte que la masse lourde 14 prend sa forme finale en refroidissant, et que la colle thermofusible assure l'adhésion du textile 12 et de la masse lourde 14 en refroidissant.

Une fois cela fait, le procédé comporte l'ouverture du moule 16 et le retrait de la pièce d'insonorisation 16.

Il est alors possible de réaliser une nouvelle pièce avec le même procédé.

Il est à noter que le temps de cycle de ce procédé est relativement réduit, notamment en comparaison des procédés de fabrications connus dans l'état de la technique.

## Revendications

1. Procédé de fabrication d'une pièce d'insonorisation (10), de type masse/ressort, notamment pour un véhicule automobile, comprenant les étapes suivantes :
- fourniture d'un textile (12) de matériau fibreux, comprenant des fibres fusibles, et/ou des résines,
- chauffage et thermoformage du textile de matériau fibreux (12), pour obtenir un textile thermoformé (12),
- fourniture d'un moule (16) comprenant une partie inférieure (16a) et une partie supérieure (16b), la partie inférieure (16a) présentant une forme complémentaire à celle du feutre thermoformé (12),
- disposition du textile thermoformé (12) sur la partie inférieure (16a) du moule,
- dispersion d'un adhésif sur le textile thermoformé (12),
- fourniture d'une plaque de matériau (14) de type masse lourde,
- chauffage de la plaque de masse lourde (14) jusqu'à sa température de ramollissement,
- suite au chauffage de la plaque de masse lourde (14), étalage de la plaque de masse lourde (14) sur le textile thermoformé (12), de manière à épouser sa forme,
- fermeture du moule (16), et compression du textile thermoformé (12) et de la plaque de masse lourde (14) superposés, de manière à former la pièce d'insonorisation (10),
- ouverture du moule (16) et retrait de la pièce d'insonorisation (10).

2. Procédé de fabrication selon la revendication 1, dans lequel l'adhésif est une colle thermofusible.

3. Procédé de fabrication selon la revendication 1, dans lequel l'adhésif est un film ou un non tissé laminé avec le textile (12), cet adhésif étant par exemple réalisé en Polyéthylène.

4. Procédé de fabrication selon l'une quelconque des revendications précédentes, dans lequel le textile (12) est un feutre.

5. Procédé de fabrication selon l'une quelconque des revendications précédentes, dans lequel la compression dans le moule (16) est réalisée à froid.

6. Procédé de fabrication selon l'une quelconque des revendications précédentes, dans lequel la partie inférieure de moule (16a) est au moins en partie concave.

## Patentansprüche

1. Verfahren zur Herstellung eines Schalldämmteils (10) des Typs Masse/Feder, insbesondere für ein Kraftfahrzeug, die folgenden Schritte umfassend:
- Liefern einer Textilie (12) aus Fasermaterial, das schmelzbare Fasern und/oder Harze umfasst,
- Heizen und Thermoformen der Textilie (12) aus Fasermaterial, um eine thermogeformte Textilie (12) zu erhalten,
- Bereitstellen einer Form (16), die ein unteres Teil (16a) und ein oberes Teil (16b) umfasst, wobei das untere Teil (16a) eine komplementäre Form zu der des thermogeformten Filzes (12) aufweist,
- Anordnen der thermogeformten Textilie (12) auf dem unteren Teil (16a) der Form,
- Verteilen eines Haftvermittlers auf die thermogeformte Textilie (12),
- Bereitstellen einer Platte aus einem Material (14) schwerer Masse,
- Aufheizen der Platte (14) schwerer Masse bis auf ihre Erweichungstemperatur,
- nachfolgend auf das Aufheizen der Platte (14) schwerer Masse Ausbreiten der Platte (14) schwerer Masse auf der thermogeformten Textilie (12), sodass sie sich an ihre Form anschmiegt,
- Schließen der Form (16) und Komprimieren der übereinanderliegenden thermogeformten Textilie (12) und Platte (14) schwerer Masse, um so das Schalldämmteil (10) zu bilden,
- Öffnen der Form (16) und Herausnehmen des Schalldämmteils (10).

2. Herstellungsverfahren nach Anspruch 1, bei dem der Haftvermittler ein thermoschmelzbarer Klebstoff ist.

3. Herstellungsverfahren nach Anspruch 1, bei dem der Haftvermittler eine Folie oder ein mit der Textilie (12) laminiertes Vlies ist, wobei die ser Haftvermittler beispielsweise aus Polyethylen hergestellt ist.

4. Herstellungsverfahren nach einem beliebigen der vorhergehenden Ansprüche, bei dem die Textilie (12) ein Filz ist.

5. Herstellungsverfahren nach einem beliebigen der vorhergehenden Ansprüche, bei dem das Komprimieren in der Form (16) kalt durchgeführt wird.

6. Herstellungsverfahren nach einem beliebigen der vorhergehenden Ansprüche, bei dem das untere Teil der Form (16a) mindestens teilweise konkav ist.

## Claims

1. Method for manufacturing a soundproofing part (10), of the mass/spring type, especially for an automotive vehicle, comprising the following steps:
- providing a textile (12) of fibrous material, comprising fusible fibres and/or resins,
- heating and thermoforming the textile of fibrous material (12) to obtain a thermoformed textile (12),
- providing a mould (16) having a lower part (16a) and an upper part (16b), the lower part (16a) having a shape complementary to the shape of the thermoformed felt (12),
- arranging the thermoformed textile (12) on the lower part (16a) of the mould,
- dispersing an adhesive over the thermoformed textile (12),
- providing a sheet of material (14) of the heavy mass type,
- heating the sheet of heavy mass (14) to its softening temperature,
- following heating of the sheet of heavy mass (14), spreading the sheet of heavy mass (14) over the thermoformed textile (12) so that it moulds to the shape thereof,
- closing the mould (16) and compressing the superposed thermoformed textile (12) and sheet of heavy mass (14) so as to form the soundproofing part (10),
- opening the mould (16) and removing the soundproofing part (10).

2. Manufacturing method according to claim 1, wherein the adhesive is a hotmelt glue.

3. Manufacturing method according to claim 1, wherein the adhesive is a film or a nonwoven laminated with the textile (12), this adhesive being made, for example, of polyethylene.

4. Manufacturing method according to any one of the preceding claims, wherein the textile (12) is a felt.

5. Manufacturing method according to any one of the preceding claims, wherein the compression in the mould (16) is carried out cold.

6. Manufacturing method according to any one of the preceding claims, wherein the lower part of the mould (16a) is concave at least in part.
